# EUROPÄISCHE PATENTSCHRIFT

(11) **EP 2 985 580 B1**
(45) Veröffentlichungstag und Bekanntmachung des Hinweises auf die Patenterteilung: **21.06.2017**
(21) Anmeldenummer: 15178755.3
(22) Anmeldetag: 29.07.2015
(51) Int. Cl.: G01K 7/22, G01K 15/00

(54) **VERFAHREN ZUM ERKENNEN EINES FEHLERZUSTANDES IN EINEM THERMISCHEN SCHUTZSYSTEM UND VORRICHTUNG ZUR DURCHFÜHRUNG DES VERFAHRENS**
METHOD FOR DETECTING AN ERROR STATUS IN A THERMAL PROTECTION SYSTEM AND DEVICE FOR CARRYING OUT THE METHOD
PROCEDE DE DÉTECTION D'UN ETAT D'ERREUR DANS UN SYSTÈME DE PROTECTION THERMIQUE ET DISPOSITIF D'EXÉCUTION DU PROCÉDÉ

(30) Priorität: 14.08.2014 DE 102014011939
(43) Veröffentlichungstag der Anmeldung: 17.02.2016
(73) Patentinhaber: ABB AG, 68309 Mannheim (DE)
(72) Erfinder: Lill, Dirk, 79117 Freiburg im Breisgau (DE)

(56) Entgegenhaltungen:
- EP-A1- 0 826 951
- JP-A- 2004 163 286
- US-A1- 2004 249 583

## Beschreibung

Die Erfindung betrifft ein Verfahren zum Erkennen eines Fehlerzustandes in einem thermischen Schutzsystem mit einem Temperaturfühler, sowie eine Vorrichtung zur Durchführung eines solchen Verfahrens.

Ein solches thermisches Schutzsystem ist beispielsweise ein System für den thermischen Motorschutz mit einem Thermistor als Temperaturfühler. Ein Fehlerzustand, der in einem solchen thermischen Schutzsystem erkannt werden soll, ist beispielsweise ein Drahtbruch in der Zuleitung zu dem Thermistor.

Der Widerstand eines Temperaturfühlers vom Typ Thermistor steigt oberhalb seiner Ansprechtemperatur stark an. Die Ansprechtemperatur ist dabei so gewählt, dass sie einer unzulässig hohen Motortemperatur entspricht, auf die überwacht und reagiert werden soll. Im Stand der Technik bekannt ist es, den Widerstandsmesswert des Temperaturfühlers zu erfassen, und dann, wenn ein Messwert erkannt wird, der einer unzulässig hohen Motortemperatur entspricht, eine entsprechende Reaktion auszulösen. Diese kann im Absetzen einer Alarmmeldung und/oder dem Abschalten oder Drosseln des Motors bestehen. Es wird im Stand der Technik ein Schwellwert für den Widerstandsmesswert definiert, unterhalb dessen ein normaler Motorzustand vorliegt, und oberhalb dessen ein unerwünschter Motorzustand vorliegt.

Wenn der Widerstandsmesswert oberhalb des Schwellwertes liegt, kann dies allerdings noch einen zweiten Grund haben. Es könnte nämlich auch ein Drahtbruch in der Sensorzuleitung oder eine fehlerhafte Verbindungsstelle beim Anschluss des Sensorkabels vorliegen, was dann einen entsprechend hohen Sensorwiderstand vortäuschen würde. Die JP 2004163286 A beschreibt ein System mit dem eine derartige fehlerhafte Verbindungsstelle erkannt werden kann. Man möchte beim Betrieb eines thermischen Schutzsystems, wenn ein Widerstandsmesswert oberhalb des Schwellwertes registriert wird, unterscheiden können zwischen einem normalen Betriebsfall, das heißt der Sensor ist in Ordnung und er zeigt einen unzulässigen Motorzustand an, und einem Fehlerfall des Sensors, das heißt es liegt ein Drahtbruch bzw. einem Sensorfehler vor und man kann nicht mehr zuverlässig den Motorzustand überwachen.

Eine Drahtbrucherkennung basierend allein auf der Erfassung des Widerstandswertes ist nicht sehr zuverlässig. Denn ein Drahtbruch würde ja auch einen hohen Widerstandsmesswert zur Folge haben. Dieser liegt auch oberhalb des Schwellwertes für den unerwünschten Motorbetrieb, zumindest in derselben Größenordnung wie der Widerstandsmesswert des Thermistors oberhalb der Ansprechtemperatur. Bei Erfassen eines hohen, den Schwellwert übersteigenden Widerstandsmesswertes ist dann nicht mehr zu unterscheiden, ob dieser on einem Drahtbruch herrührt oder daher, dass der Thermistor seine Ansprechtemperatur überschritten hat. Damit wäre eine zuverlässige Unterscheidung zwischen einem Drahtbruch und einer Motorüberhitzung nicht mehr möglich. Es könnte dann zum gehäuften Auftreten von Fehlalarmen kommen, was unerwünscht ist.

Ein weiteres Problem besteht darin, dass ein thermischer Motorschutz mit einem Thermistor-Temperaturfühler oft in einer rauhen Umgebung mit großen elektromagnetischen Störeinflüssen, auch als rauhe EMV-Bedingung, von Elektromagnetische Verträglichkeit EMV, bezeichnet, eingesetzt wird. Elektromagnetische Störeinflüsse können einen hohen Widerstandsmesswert vortäuschen und damit zu Fehlauslösungen führen. Es kann sogar durch elektromagnetische Störungen fälschlicherweise ein Drahtbruch signalisiert werden, was zu unnötigen und teuren Serviceeinsätzen führen kann.

In anderen Worten, von einem Drahtbruch wird ausgegangen, wenn der Wert eines temperaturabhängigen Widerstands, beispielsweise eines Thermistors, den Erfassungsbereich überschreitet. Der Widerstand von korrekt angeschlossenen Thermistoren steigt oberhalb der Ansprechtemperatur sehr stark an, so dass nicht zuverlässig zwischen einem Drahtbruch und einem intakten System im Übertemperaturbereich unterschieden werden kann. Darüber hinaus können die Messwerte bei EMV-Belastung kurzfristig auch so stark beeinflusst werden, dass fälschlicherweise von einem Drahtbruch ausgegangen wird.

Es ist daher die der Erfindung zugrunde liegende Aufgabe, ein robustes Verfahren zum Erkennen eines Fehlerzustandes in einem thermischen Schutzsystem zu schaffen, das wenig anfällig gegen elektromagnetische Störeinflüsse ist und bei Erfassen eines hohen Widerstandsmesswertes eine zuverlässige Unterscheidung zwischen einem Drahtbruch und einem normalen Zustand des Temperaturfühlers erlaubt.

Es ist eine weitere Aufgabe der vorliegenden Erfindung, eine Vorrichtung zur Durchführung eines so verbesserten Verfahrens zu schaffen.

Die Aufgabe wird bezüglich des Verfahrens gelöst durch ein Verfahren mit den Merkmalen des Anspruchs 1.

Die Aufgabe wird bezüglich der Vorrichtung gelöst durch eine Vorrichtung mit den Merkmalen des Anspruchs 8. Erfindungsgemäß also umfasst das Verfahren zum Erkennen eines Fehlerzustandes in einem thermischen Schutzsystem die folgenden Schritte:
a) Erfassen des zeitlichen Verlaufs des Messsignals des Temperaturfühlers,
b) Filtern des Messsignals des Temperaturfühlers mit einem Tiefpassfilter,
c) Ermitteln der Volatilität des Messsignals und Anpassen des Tiefpassfilters an die Volatilität des Messsignals,
d) Ermitteln eines gleitenden Mittelwertes des tiefpassgefilterten Messsignals des Temperaturfühlers,
e) Vergleichen des tiefpassgefilterten Messsignals mit seinem gleitenden Mittelwert und Erkennen eines Fehlerzustandes anhand des Vergleichsergebnisses.

Das erfindungsgemäße Verfahren ist ein dynamisches Erkennungsverfahren. Es macht sich die Erkenntnis zunutze, dass der Anstieg des Widerstandswertes, also die zeitliche Änderungsrate des Messsignalverlaufs des Widerstandsmesswertes, bei einem Drahtbruch schneller erfolgt als bei Überschreiten der Ansprechtemperatur des Temperaturfühlers im normalen Betriebszustand des Temperaturfühlers. Somit kann durch Vergleichen des tiefpassgefilterten Messsignals des Temperaturfühlers mit dem gleitenden Mittelwert des tiefpassgefilterten Messsignals des Temperaturfühlers eine zuverlässige Unterscheidung getroffen werden zwischen einem Drahtbruch und einem normalen Anzeigen eines unerwünschten Motorzustandes mit überhöhter Motortemperatur.

Der erfindungsgemäß zusätzlich vorgesehene Tiefpassfilter ermöglicht eine Vermeidung von Einflüssen elektromagnetischer Störungen aus der Einsatzumgebung des Temperaturfühlers. Das erfindungsgemäße Verfahren filtert EMV-Einflüsse aus den Messwerten und bewertet einen sprunghaften Anstieg des Widerstandswerts anstatt des Absolutwerts.

Unter der Volatilität des Messsignals wird hier die Schwankungsintensität des Messsignals verstanden. In einer Umgebung mit starken elektromagnetischen Störeinflüssen ist die Schwankungsintensität des Messsignals entsprechend hoch, höher als in einer Umgebung mit geringen elektromagnetischen Störungen. Ermittelt werden kann die Volatilität beispielsweise durch die Ermittlung der Differenz zwischen dem höchsten Messwert und dem niedrigsten Messwert innerhalb eines Messintervalls oder Abtastintervalls. Dies ist als MIN/MAX-Bestimmung bekannt. Ein verrauschtes Signal in einer stark EMV-gestörten Umgebung wird hohe Stör-Spikes aufweisen, das hat eine hohe ermittelte Volatilität zur Folge. Erfindungsgemäß wird der Tiefpassfilter an die Volatilität des Messsignals angepasst, bezüglich Bandbreite und Reaktionszeit etwa. Dazu ist der Tiefpassfilter bevorzugt als digitaler Filter ausgebildet. Um Materialkosten niedrig zu halten, werden dazu bevorzugt sehr einfache Mikroprozessoren in der Auswerteelektronik verwendet. Die Anpassung des Tiefpassfilters an die Volatilität des Messsignals erlaubt es, mit einem einfachen und kostengünstigen Mikroprozessor dennoch eine gute Filterperformance zu erreichen, denn der Filteralgorithmus brauch nicht dauernd die höchste Filterperformance zu leisten, was entsprechend viel Rechenzeit kostet, sondern nur in den Fällen der hohen Volatilität des Messsignals. In Zeiten niedriger Volatilität des Messsignals kann der Filteralgorithmus entsprechend einfacher und damit weniger rechenzeitintensiv betrieben werden.

Filterbandbreite und Reaktionszeit werden also an die EMV-Belastung angepasst.

Die irrtümliche Erkennung eines Drahtbruchs führt beim Kunden in der Regel zu einem Serviceeinsatz, während bei einer Auslösung durch Übertemperatur das Gerät per Fern-Reset zurückgesetzt werden kann. Durch das erfindungsgemäße Verfahren kann die Verfügbarkeit gesteigert und Servicekosten beim Kunden reduziert werden.

Eine vorteilhafte Weiterbildung des erfindungsgemäßen Verfahrens ist dadurch gekennzeichnet, dass eine Abtastung des Messsignals des Temperaturfühlers erfolgt, wobei die Zahl n der Abtastungen in einem Abtastintervall mit vorgebbarer Abtastzeit in Abhängigkeit von der Volatilität des Messsignals angepasst wird. Die Abtastung erfolgt bevorzugt mittels einer ADC-Abtastschaltung (ADC steht für "Analog to Digital Conversion"). Jedes Abtastintervall hat eine vorgebbare Abtastzeit, innerhalb eines Abtastintervalls wird eine vorgebbare Anzahlt von Abtastungen vorgenommen. Ein Messsignal mit hoher Volatilität wird erfindungsgemäß mit einer höheren Zahl von Abtastungen pro Abtastintervall abgetastet als ein Messsignal mit niedriger Volatilität.

Eine vorteilhafte Weiterbildung des erfindungsgemäßen Verfahrens ist daher dadurch gekennzeichnet, dass die Volatilität V als Ergebnis einer MIN/MAX-Bestimmung der Abtastwerte innerhalb eines Abtastintervalls erfolgt, und dass die Zahl n der Abtastwerte bei hoher Volatilität V erhöht und bei niedriger Volatilität erniedrigt wird.

Eine vorteilhafte Weiterbildung des erfindungsgemäßen Verfahrens ist dadurch gekennzeichnet, dass in jedem Abtastintervall ein diskreter Mittelwert über die Zahl n der Abtastungen in diesem Abtastintervall gebildet wird. Die Bildung des diskreten Mittelwertes innerhalb jeden Abtastintervalls ist ein einfacher und auch mit einem einfachen Prozessor mit wenig Rechenzeit durchführbarer Algorithmus für einen-Tiefpassfilter. Die Anpassung des Tiefpassfilters an die Volatilität des Messsignals erfolgt dabei erfindungsgemäß über die Anpassung der Anzahl der Abtastungen pro Abtastintervall.

Eine vorteilhafte Weiterbildung des erfindungsgemäßen Verfahrens ist dadurch gekennzeichnet, dass aus einer Anzahl von aufeinanderfolgenden diskreten Mittelwerten der gleitende Mittelwert gebildet wird, und dass die Differenz zwischen dem als letztes erfassten diskreten Mittelwert und dem gleitenden Mittelwert gebildet wird, und dass, wenn diese Differenz einen vorgebbaren Schwellwert überschreitet, ein Fehlerzustand in dem thermischen Schutzsystem erkannt und angezeigt wird.

Eine vorteilhafte Weiterbildung des erfindungsgemäßen Verfahrens ist dadurch gekennzeichnet, dass der Fehlerzustand ein Drahtbruch in einer Zuleitung zu dem Temperaturfühler ist.

Eine vorteilhafte Weiterbildung des erfindungsgemäßen Verfahrens ist dadurch gekennzeichnet, dass der Temperaturfühler vom Typ Thermistor ist.

Eine erfindungsgemäße Vorrichtung zum Durchführen des erfindungsgemäßen Verfahrens umfasst folgende funktionale Baugruppen:
- eine A/D-Wandlungs- und Abtasteinrichtung, die eingangsseitig mit dem Messsignal des Temperaturfühlers beaufschlagt ist,
- einen Tiefpassfilter,
- eine Volatilitätsbewertungseinheit, zur Anpassung des Tiefpassfilters an die Volatilität des Messsignals,
- eine Mittelwertbildungseinheit zur Bildung eines gleitenden Mittelwertes des Messsignals,
- eine Vergleichs-und Bewertungseinheit zum Vergleich des Messsignals mit seinem gleitenden Mittelwert und zum Erkennen eines Fehlerzustandes anhand des Vergleichsergebnisses.

In einer vorteilhaften Weiterbildung der erfindungsgemäßen Vorrichtung ist der Tiefpassfilter zur Bildung eines disktreten Mittelwertes in jedem Abtastintervall über die Zahl n der Abtastungen in diesem Abtastintervall eingerichtet, und die Volatilitätsbewertungseinheit ist zu einer MIN/MAX-Bestimmung der Abtastwerte innerhalb eines Abtastintervalls und zur Erhöhung der Zahl n der Abtastwerte bei hoher Volatilität V und zur Verringerung der Zahl n der Abtastwerte bei niedriger Volatilität eingerichtet, und die Mittelwertbildungseinheit ist zur Bildung eines gleitenden Mittelwertes aus einer Anzahl von aufeinanderfolgenden diskreten Mittelwerten ausgebildet, und die Vergleichs-und Bewertungseinheit ist zur Ermittlung der Differenz zwischen dem als letztes erfassten diskreten Mittelwert und dem gleitenden Mittelwert ausgebildet, und ein Fehlerzustand in dem thermischen Schutzsystem ist erkannt, wenn die Differenz einen vorgebbaren Schwellwert überschreitet.

Der erfindungsgemäß vorgesehene Tiefpassfilter zur Vermeidung des Einflusses von elektromagnetischen Störungen ist also hier durch einen Abtastfilter realisiert.

Einflüsse durch Wechselrichter oder andere Quellen elektromagnetischer Störungen können durch Durchschnittsbildung der Abtastwerte auf einfach Weise verringert werden. Hierzu kann ein gleitender Mittelwert oder die Erfassung einer festen Anzahl von Abtastwerten mit anschließender Mittelwertbildung angewendet werden.

Um einen Indikator für den Einfluss von Störeinflüssen aus der Umgebung auf das Messsignal des Temperaturfühlers zu ermitteln, wird die sogenannte Volatilität erfasst. Die Volatilität gibt Aufschlüsse über die vorherrschenden Störeinflüsse. Bei größerer Volatilität werden die Mittelwerte über mehr Messwerte gebildet, sind die Störeiflüsse geringer, kann die Anzahl reduziert werden und schneller auf das Auslösen reagiert werden.

Als beispielhafte, typische Dynamik eines Thermistor- Sensors gilt etwa ein Wert von 250Ω/s. Dies erlaubt eine ausreichende Überabtastung, selbst bei einer geräteintern geforderten Auslösezeit von 100ms.

Die Mittelwerte des Messwertes des Sensorsignals werden über einen längeren Zeitraum betrachtet, und ein Sprung im Sensorsignal wird festgestellt und als Indikator für einen Drahtbruch erkannt.

Als Tiefpass wird hier in dem erfindungsgemäßen Verfahren eine diskrete Mittelwertbildung über ein Wertepaket von etwa 10 ADC-Abtastungen in einer Abtastperiode von T= 10ms durchgeführt.

In einer kostengünstigen Vorrichtung zur Durchführung des erfindungsgemäßen Verfahrens wird ein einfacher und entsprechend preiswerter Mikrokontroller eingesetzt, der nur eine geringe Rechenleistung hat. Das erfindungsgemäße Verfahren ist daher so umgesetzt, dass nur wenige und einfache Rechenoperationen erforderlich sind.

Zur einfachen Erfassung der Volatilität mit einem einfachen, billigen Mikrocontroller wird die Volatilität über die einfache Minimum- und Maximum-Ermittlung je Wertepaket ermittelt.

Zur Erkennung von Sprüngen wird aus den Mittelwerten ein weiterer gleitender Mittelwert gebildet und bei starken Abweichungen, von diesem der Drahtbruch erkannt. Ein typischer Indikatorwert hierfür ist eine Änderungsrate von 1 kOhm / 100ms.

Die Art des Fehlers, ob es eine Übertemperatur, ein Kurzschluss, oder ein Drahtbruch ist, wird lokal signalisiert.

Sie kann anschließend auch über eine Feldbusanbindung der erfindungsgemäßen Vorrichtung weitergeleitet werden an eine Motorsteuerung oder ein übergeordnetes Prozessdatenerfassungs- und Steuersystem.

Die Erfindung wird nachfolgend anhand eines Ausführungsbeispiels in Verbindung mit den beiliegenden Zeichnungen näher erläutert.

Es zeigen
- Figur 1: eine charakteristische Kennlinie eines Thermistors,
- Figur 2: eine schematische, funktionale Darstellung eines Blockschaltbildes einer erfindungsgemäßen Vorrichtung,
- Figur 3: schematisch und exemplarisch einen Signalverlauf zur Erläuterung des erfindungsgemäßen Verfahrens.

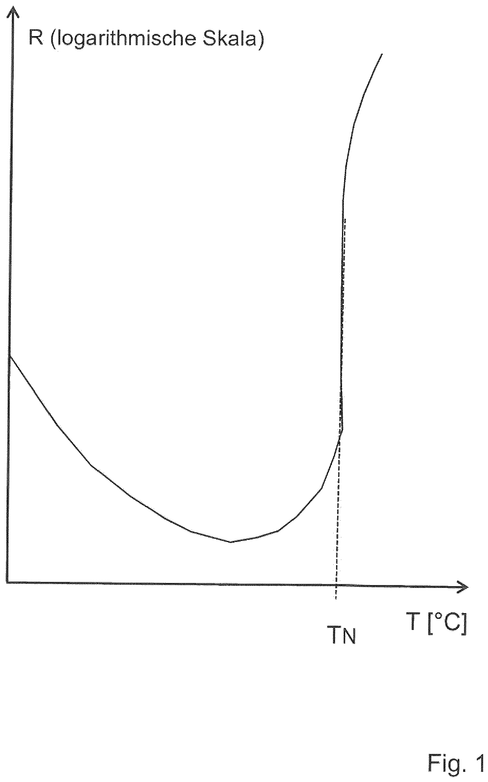

Figur 1 zeigt das Temperatur-Widerstandsverhalten eines Thermistors als Kaltleiter, mit positivem Temperaturkoeffizienten, hier etwa eines sogenannten Typ-A-Fühlers in der Ausführung mit keramischen Werkstoffen. Diese Bauelemente werden oft zur Temperaturüberwachung von Motoren eingesetzt. Sie sind etwa bis 200 C einsetzbar. Ihre Kennlinie steigt in einem engen Bereich um ihre Nenn-Ansprechtemperatur T_{N} mit bis zu 30 % pro °C an. Ein typischer Typ-A-Sensor kann beispielsweise bei seiner Nenn-Ansprechtemperatur T_{N} einen Widerstandswert von 1350 Ω haben, und bei einer Temperatur von 5° unterhalb der Nenn-Ansprechtemperatur einen Widerstandswert von weniger als 550 Ω. Bezüglich der zeitlichen Anstiegsdynamik eines solchen Temperaturfühlers werden typische Werte in der Größenordnung von 250Ω/s genannt.

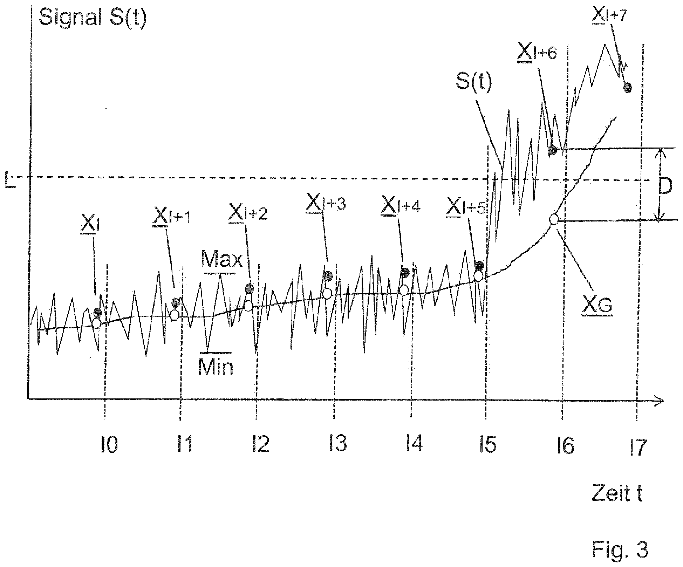

Es werde nun die Figur 3 betrachtet. Hier ist schematisch und exemplarisch der zeitliche Verlauf eines Temperaturfühlers vom Typ A gezeigt, wie er in einer typischen Einsatzsituation zur Motorüberwachung vorkommen kann. Eingezeichnet ist auch beispielhaft und exemplarisch ein Schwellwert L für das Messsignal. Überschreitet das Messsignal S(t) den Schwellwert, so wird eine Überhitzung des Motors angenommen und eine entsprechende Warnung von dem thermischen Schutzsystem ausgegeben und gegebenenfalls ein Motorschutz ausgelöst.

Das Signal S(t) ist leicht verrauscht. Das Signal S(t) wird in aufeinanderfolgenden Abtastintervallen mit der Intervalllänge T abgetastet, hier im Beispiel beträgt T beispielsweise 10ms. Hier in der Figur sind acht solcher aufeinanderfolgender Intervalle dargestellt, bezeichnet mit den Ziffern I₀ bis I₇. In jedem Intervall wird der Mittelwert des Signals S(t) gebildet, über eine vorgebbare Zahl von Abtastungen, hier im Beispiel werden beispielsweise 10 Abtastungen pro Intervall vorgenommen. Der Mittelwert des Signals S(t) in jedem Intervall ist durch einen ausgefüllten Punkt veranschaulicht und mit X_{I} bis X_{I+7} bezeichnet.

Die Zahl der Abtastungen kann abgepasst werden an die Volatilität des Messsignals S(t) in jedem Intervall. Exemplarisch ist für das Intervall I₂ angedeutet, dass die Volatiliät des Messsignals S(t) durch eine Max/Min-Bestimmung innerhalb des jeweiligen Abtastintervalls bestimmt wird. Wenn das Messsignal S(t) weniger volatil, also glatter, verläuft, könnte die Anzahl n der Abtastungen, über die der Mittelwert in einem Intervall gebildet wird, auch auf einen kleineren Wert als 10 eingestellt werden. Bei einem höher volatilen Signal wiederum könnte die Anzahl n der Abtastungen, über die der Mittelwert in einem Intervall gebildet wird, auch auf einen größeren Wert als 10 eingestellt werden.

Aus den Mittelwerten aufeinanderfolgender Intervalle wird ein gleitender Mittelwert gebildet. Dieser ist durch die glatte Kurve X_{G} angedeutet.

Zwischen dem Intervall I₀ und I₅ steigt der Signalverlauf S(t) leicht an, ebenso der gleitende Mittelwert. Die Temperatur des Motors erhöht sich langsam, was sich in dem langsamen Anstieg der Mittelwerte in jedem Abtastintervall und des gleitenden Mittelwertes bemerkbar macht. Das Messsignal S(t) ist jedoch noch unterhalb des Schwellwertes L.

Im Intervall I₆ erfolgt ein schneller Anstieg des Messsignals S(t) über den Schwellwert L hinaus. Ein solch schneller Anstieg ist untypisch für eine Motorüberhitzung, das heißt, dieser schnelle Anstieg des Widerstandsmesswertes resultiert aus einem Drahtbruch oder einem sonstigen Sensorfehler. Allein anhand des Sensorsignals S(t) sieht das thermische Schutzsystem jedoch nur ein Überschreiten des Schwellwertes L und geht von einer Motorüberhitzung aus. Der Motor ist aber gar nicht überhitzt, sondern es liegt ein Drahtbruch oder sonstiger Sensorfehler vor, somit würde das thermische Schutzsystem unnötigerweise den Motorschutz auslösen.

Um das zu vermeiden, wird in dem erfindungsgemäßen Verfahren der jeweils in dem letzten Intervall gebildete Mittelwert dieses Intervalls mit dem gleitenden Mittelwert, gebildet aus den Mittelwerten der vorangegangenen Intervalle, verglichen. In den Intervallen I₀ bis I₅ ist die Differenz zwischen dem jeweiligen Intervall-Mittelwert X_{I} bis X_{I+7} und dem jeweiligen gleitenden Mittelwert niedrig. Im Intervall 16 ist diese Differenz D sehr groß, weil der gleitende Mittelwert in seinem Anstieg dem Anstieg des Intervall-Mittelwertes nachhinkt.

Anhand der Differenz zwischen dem jeweiligen Intervall-Mittelwert und dem gleitenden Mittelwert aus den vorhergehenden Intervallen lässt sich also ein durch einen Drahtbruch verursachter sehr schneller Widerstandsanstieg von einem durch normale Motorerwärmung verursachter langsamer Widerstandsanstieg unterscheiden und somit ein Drahtbruch erkennen. Durch die Mittelwertbildung in jedem Intervall erfolgt gewissermaßen eine Tiefpassfilterung des Messsignals S(t), damit auch bei stark gestörtem, sehr volatilem Messsignal S(t) nicht irrtümlich durch einen störungsbedingten kurzzeitigen Signalpeak fälschlich ein Drahtbruch erkannt wird.

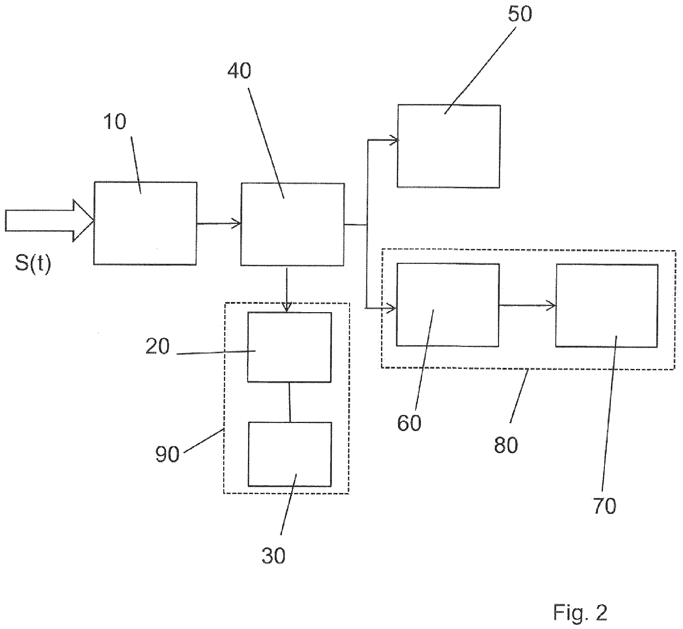

Es werde jetzt die Figur 2 betrachtet. Diese zeigt schematisch und exemplarisch als Blockschaltbild eine erfindungsgemäße Vorrichtung 100 zum Durchführen des erfindungsgemäßen Verfahrens. Sie umfasst eine A/D-Wandlungs- und Abtasteinrichtung (ADC-Abtastung) 10, die eingangsseitig mit dem Messsignal S(t) des Temperaturfühlers beaufschlagt ist. Ausgangsseitig ist die ADC-Abtastung 10 signaltechnisch mit einem Tiefpassfilter 40 verbunden. Der Tiefpassfilter 40 ist zur Bildung eines disktreten Mittelwertes Xᵢ in jedem Abtastintervall über die Zahl n der Abtastungen in diesem Abtastintervall eingerichtet.

Eine Volatilitätsbewertungseinheit 90 erfasst und bewertet mit ihrem Volatilitätserfassungsteil 20 die Volatilität des Messsignals S(t). Mit ihrer Anpasseinheit 30 bewirkt sie eine Anpassung des Tiefpassfilters 40 an die Volatilität des Messsignals s(t). Dabei ist die Volatilitätsbewertungseinheit 90 im Zusammenspiel zwischen ihrem Volatilitätserfassungsteil 20 mit ihrer der Anpasseinheit 30 zu einer MIN/MAX-Bestimmung der Abtastwerte innerhalb eines Abtastintervalls und zur Erhöhung der Zahl n der Abtastwerte bei hoher Volatilität und zur Verringerung der Zahl n der Abtastwerte bei niedriger Volatilität eingerichtet.

In einer Mittelwertbildungseinheit 50 wird ein gleitender Mittelwert des Messsignals S(t) aus einer Anzahl von aufeinanderfolgenden diskreten Mittelwerten Xᵢ, Xᵢ₊₁, ...Xᵢ₊ⱼ gebildet.

Eine Vergleichs-und Bewertungseinheit 80 vergleicht in ihrem Vergleichsteil 60 das Messsignal mit seinem gleitenden Mittelwert und erkennt in seinem Bewertungsteil 70 einen Fehlerzustand anhand des Vergleichsergebnisses. Dabei ist die Vergleichs-und Bewertungseinheit zur Ermittlung der Differenz D zwischen dem als letztes erfassten diskreten Mittelwert Xᵢ₊ⱼ und dem gleitenden Mittelwert X_{G} ausgebildet, und zum Erkennen eines Fehlerzustandes in dem thermischen Schutzsystem, wenn die Differenz D einen vorgebbaren Schwellwert L überschreitet.

Die Vorrichtung 100 ist als elektronische Schaltung mit einem Mikroprozessor ausgeführt. Die einzelnen Funktionsblöcke sind dabei entweder als Hardwareschaltung oder Firmware oder Teil des Arbeitsprogrammes des Mikroprozessors in Software realisiert.

## Patentansprüche

1. Verfahren zum Erkennen eines Fehlerzustandes in einem thermischen Schutzsystem mit einem Temperaturfühler, mit den folgenden Schritten:
a) Erfassen des zeitlichen Verlaufs des Messsignals S(t) des Temperaturfühlers,
b) Filtern des Messsignals des Temperaturfühlers mit einem Tiefpassfilter (40),
c) Ermitteln der Volatilität des Messsignals S(t) und Anpassen des Tiefpassfilters (40) an die Volatilität des Messsignals S(t),
d) Ermitteln eines gleitenden Mittelwertes X_{G} des tiefpassgefilterten Messsignals S(t) des Temperaturfühlers,
e) Vergleichen des tiefpassgefilterten Messsignals S(t) mit seinem gleitenden Mittelwert X_{G} und Erkennen eines Fehlerzustandes anhand des Vergleichsergebnisses.

2. Verfahren nach Anspruch 1, **dadurch gekennzeichnet, dass** eine Abtastung des Messsignals S(t) des Temperaturfühlers erfolgt, wobei die Zahl n der Abtastungen in einem Abtastintervall mit vorgebbarer Abtastzeit (T) in Abhängigkeit von der Volatilität des Messsignals S(t) angepasst wird.

3. Verfahren nach Anspruch 2, **dadurch gekennzeichnet, dass** die Volatilität V als Ergebnis einer MIN/MAX-Bestimmung der Abtastwerte innerhalb eines Abtastintervalls erfolgt, und dass die Zahl n der Abtastwerte bei hoher Volatilität V erhöht und bei niedriger Volatilität erniedrigt wird.

4. Verfahren nach Anspruch 3, **dadurch gekennzeichnet, dass** in jedem Abtastintervall ein diskreter Mittelwert Xᵢ über die Zahl n der Abtastungen in diesem Abtastintervall gebildet wird.

5. Verfahren nach Anspruch 4, **dadurch gekennzeichnet, dass** aus einer Anzahl von aufeinanderfolgenden diskreten Mittelwerten (Xᵢ, Xᵢ₊₁, ...Xᵢ₊ⱼ) der gleitende Mittelwert (X_{G}) gebildet wird, und dass die Differenz (D) zwischen dem als letztes erfassten diskreten Mittelwert (Xᵢ₊ⱼ) und dem gleitenden Mittelwert (X_{G}) gebildet wird, und dass, wenn diese Differenz (D) einen vorgebbaren Schwellwert (L) überschreitet, ein Fehlerzustand in dem thermischen Schutzsystem erkannt und angezeigt wird.

6. Verfahren nach Anspruch 5, wobei der Fehlerzustand ein Drahtbruch in einer Zuleitung zu dem Temperaturfühler ist.

7. Verfahren nach Anspruch 6, wobei der Temperaturfühler vom Typ Thermistor ist.

8. Vorrichtung (100) zum Durchführen des Verfahrens nach einem der vorigen Ansprüche, welche folgende funktionale Baugruppen umfasst:
- eine A/D-Wandlungs- und Abtasteinrichtung (10), die eingangsseitig mit dem Messsignal S(t) des Temperaturfühlers beaufschlagt ist,
- ein Tiefpassfilter (40),
- eine Volatilitätsbewertungseinheit (90), zur Anpassung des Tiefpassfilters an die Volatilität des Messsignals,
- eine Mittelwertbildungseinheit (50) zur Bildung eines gleitenden Mittelwertes des tiefpassgefilterten Messsignals S(t),
- eine Vergleichs-und Bewertungseinheit (80) zum Vergleich des tiefpassgefilterten Messsignals S(t) mit seinem gleitenden Mittelwert (X_{G}) und zum Erkennen eines Fehlerzustandes anhand des Vergleichsergebnisses.

9. Vorrichtung (100) nach Anspruch 8, **dadurch gekennzeichnet, dass**
- der Tiefpassfilter (40) zur Bildung eines disktreten Mittelwertes Xᵢ in jedem Abtastintervall über die Zahl n der Abtastungen in diesem Abtastintervall eingerichtet ist, und
- die Volatilitätsbewertungseinheit (90) zu einer MIN/MAX-Bestimmung der Abtastwerte innerhalb eines Abtastintervalls und zur Erhöhung der Zahl n der Abtastwerte bei hoher Volatilität V und zur Verringerung der Zahl n der Abtastwerte bei niedriger Volatilität eingerichtet ist, und
- Mittelwertbildungseinheit (50) zur Bildung eines gleitenden Mittelwertes aus einer Anzahl von aufeinanderfolgenden diskreten Mittelwerten Xᵢ, Xᵢ₊₁, ...Xᵢ₊ⱼ ausgebildet ist, und
- die Vergleichs-und Bewertungseinheit (80) zur Ermittlung der Differenz D zwischen dem als letztes erfassten diskreten Mittelwert Xᵢ₊ⱼ und dem gleitenden Mittelwert X_{G} ausgebildet ist, und zum Erkennen eines Fehlerzustandes in dem thermischen Schutzsystem, wenn die Differenz D einen vorgebbaren Schwellwert L überschreitet.

## Claims

1. Method for detecting a fault state in a thermal protection system with a temperature sensor, having the following steps of:
a) recording the temporal profile of the measurement signal S(t) from the temperature sensor,
b) filtering the measurement signal from the temperature sensor using a low-pass filter (40),
c) determining the volatility of the measurement signal S(t) and adapting the low-pass filter (40) to the volatility of the measurement signal S(t),
d) determining a sliding average value X_{G} of the low-pass-filtered measurement signal S(t) from the temperature sensor,
e) comparing the low-pass-filtered measurement signal S(t) with its sliding average value X_{G} and detecting a fault state on the basis of the comparison result.

2. Method according to Claim 1, **characterized in that** the measurement signal S(t) from the temperature sensor is sampled, the number n of sampling operations in a sampling interval with a predefinable sampling time (T) being adapted on the basis of the volatility of the measurement signal S(t).

3. Method according to Claim 2, **characterized in that** the volatility V is effected as the result of a MIN/MAX determination of the samples within a sampling interval, and **in that** the number n of samples is increased in the case of high volatility V and is reduced in the case of low volatility.

4. Method according to Claim 3, **characterized in that**, in each sampling interval, a discrete average value Xᵢ of the number n of sampling operations in this sampling interval is formed.

5. Method according to Claim 4, **characterized in that** the sliding average value (X_{G}) is formed from a number of successive discrete average values (Xᵢ, Xᵢ₊₁, ...Xᵢ₊ⱼ), and **in that** the difference (D) between the discrete average value (X₁₊ⱼ) recorded last and the sliding average value (X_{G}) is formed, and **in that** a fault state in the thermal protection system is detected and indicated if this difference (D) exceeds a predefinable threshold value (L).

6. Method according to Claim 5, the fault state being a wire break in a supply line to the temperature sensor.

7. Method according to Claim 6, the temperature sensor being of the thermistor type.

8. Apparatus (100) for carrying out the method according to one of the preceding claims, which comprises the following functional subassemblies:
- an A/D conversion and sampling device (10), to the input of which the measurement signal S(t) from the temperature sensor is applied,
- a low-pass filter (40),
- a volatility assessment unit (90) for adapting the low-pass filter to the volatility of the measurement signal,
- an averaging unit (50) for forming a sliding average value of the low-pass-filtered measurement signal S(t),
- a comparison and assessment unit (80) for comparing the low-pass-filtered measurement signal S(t) with its sliding average value (X_{G}) and for detecting a fault state on the basis of the comparison result.

9. Apparatus (100) according to Claim 8, **characterized in that**
- the low-pass filter (40) is set up to form, in each sampling interval, a discrete average value Xᵢ of the number n of sampling operations in this sampling interval, and
- the volatility assessment unit (90) is set up to carry out a MIN/MAX determination of the samples within a sampling interval and to increase the number n of samples in the case of high volatility V and to reduce the number n of samples in the case of low volatility, and
- the averaging unit (50) is designed to form a sliding average value from a number of successive discrete average values Xᵢ, Xᵢ₊₁, ...Xᵢ₊ⱼ, and
- the comparison and assessment unit (80) is designed to determine the difference D between the discrete average value Xᵢ₊ⱼ recorded last and the sliding average value X_{G} and to detect a fault state in the thermal protection system if the difference D exceeds a predefinable threshold value L.

## Revendications

1. Procédé pour détecter un état d'erreur dans un système de protection thermique comportant un capteur de température, comprenant les étapes suivantes :
a) détecter la variation dans le temps du signal de mesure S(t) du capteur de température,
b) filtrer le signal de mesure du capteur de température au moyen d'un filtre passe-bas (40),
c) déterminer la volatilité du signal de mesure S(t) et adapter le filtre passe-bas (40) à la volatilité du signal de mesure S(t),
d) déterminer une valeur moyenne glissante X_{G} du signal de mesure S(t) filtré par filtrage passe-bas du capteur de température,
e) comparer le signal de mesure S(t) filtré par filtrage passe-bas à sa moyenne glissante X_{G} et détecter un état d'erreur sur la base du résultat de mesure.

2. Procédé selon la revendication 1, **caractérisé en ce qu'**un échantillonnage du signal de mesure S(t) du capteur de température est effectué, dans lequel le nombre n des échantillonnages au cours d'un intervalle d'échantillonnage est adapté à un temps d'échantillonnage pouvant être prédéterminé (T) en fonction de la volatilité du signal de mesure S(t).

3. Procédé selon la revendication 2, **caractérisé en ce que** la volatilité V est obtenue en tant que résultat d'une détermination du MIN/MAX des valeurs d'échantillonnage à l'intérieur d'un intervalle d'échantillonnage, et **en ce que** le nombre n des valeurs d'échantillonnage augmente pour une volatilité V plus élevée et diminue pour une volatilité plus faible.

4. Procédé selon la revendication 3, **caractérisé en ce que**, dans chaque intervalle d'échantillonnage, une valeur moyenne discrète Xᵢ est calculée sur le nombre n des échantillonnages dans ledit intervalle d'échantillonnage.

5. Procédé selon la revendication 4, **caractérisé en ce que** la valeur moyenne glissante (X_{G}) est calculée à partir d'un nombre de valeurs moyennes discrètes consécutives (Xᵢ, Xᵢ₊₁, ... Xᵢ₊ⱼ), et **en ce que** la différence (D) entre la valeur moyenne discrète (xᵢ₊ⱼ) détectée en tant que dernière valeur moyenne et la valeur moyenne glissante (X_{G}) est calculée, et **en ce que**, lorsque ladite différence (D) dépasse une valeur de seuil (L) pouvant être prédéterminée, un état d'erreur dans le système de protection thermique est détecté et affiché.

6. Procédé selon la revendication 5, dans lequel l'état d'erreur est une rupture de conducteur dans une ligne d'amenée allant au capteur de température.

7. Procédé selon la revendication 6, dans lequel le capteur de température est du type thermistance.

8. Dispositif (100) destiné à mettre en oeuvre le procédé selon l'une quelconque des revendications précédentes, comprenant les modules fonctionnels suivants :
- un dispositif de conversion A/N et d'échantillonnage (10), qui reçoit en entrée le signal de mesure S(t) du capteur de température,
- un filtre passe-bas (40),
- une unité d'évaluation de la volatilité (90), destinée à adapter le filtre passe-bas à la volatilité du signal de mesure,
- une unité de calcul de valeur moyenne (50) destinée à calculer une valeur moyenne glissante du signal de mesure S(t) filtré par filtrage passe-bas,
- une unité de comparaison et d'évaluation (80) destinée à comparer le signal de mesure S(t) filtré par filtrage passe-bas à sa moyenne glissante (X_{G}) et à détecter un état d'erreur sur la base du résultat de mesure.

9. Dispositif (100) selon la revendication 8, **caractérisé en ce que**
- le filtre passe-bas (40) est conçu pour calculer une valeur moyenne discrète Xᵢ dans chaque intervalle d'échantillonnage sur le nombre n des échantillonnages dans ledit intervalle d'échantillonnage, et
- l'unité d'évaluation de la volatilité (90) est conçue pour déterminer le MIN/MAX des valeurs d'échantillonnage à l'intérieur de l'intervalle d'échantillonnage et pour augmenter le nombre n des valeurs d'échantillonnage pour une volatilité V plus élevée et pour réduire le nombre n des valeurs d'échantillonnage pour une volatilité plus faible, et
- l'unité de calcul de valeur moyenne (50) est conçue pour calculer une valeur moyenne glissante à partir d'un nombre de valeurs moyennes discrètes consécutives Xᵢ, Xᵢ₊ᵢ, ... Xᵢ₊₁, et
- l'unité de comparaison et d'évaluation (80) est conçue pour déterminer la différence D entre la valeur moyenne discrète détectée en tant que dernière valeur moyenne Xᵢ₊ⱼ et la valeur moyenne glissante X_{G}, et pour détecter un état d'erreur dans le système de protection thermique lorsque la différence D dépasse une valeur de seuil L pouvant être prédéterminée.
